# EUROPEAN PATENT APPLICATION

(11) **EP 1 557 755 A1**
(43) Date of publication of application: **27.07.2005**
(21) Application number: 05100230.1
(22) Date of filing: 17.01.2005
(51) Int. Cl.: G06F 9/30

(54) **Method for transferring data in a multiprocessor system, multiprocessor system and processor carrying out this method.**

(30) Priority: 21.01.2004 FR 0400528
(71) Applicant: Thomson Licensing S.A., 92100 Boulogne Billancourt (FR)
(72) Inventor: De Lescure, Benoît External, 35000 RENNES (FR); Plissonneau Frédéric CF Research and Innovation IC, 35235 Thorigné-Fouillard (FR); Colaitis, Marie-Jean SBU Broadband Access Products, 35510 Cesson-Sévigné (FR)
(74) Representative: Berthier, Karine

(57) **Abstract**

The present invention relates to a data transfer method of a delegating processor (200), requiring the execution of functions, to a delegate processor (202), that executes these functions based on a function identifier and execution parameters associated with this function, this identifier and these parameters being provided by the delegating processor (200), characterized in that the delegating processor (200) accesses a bank of internal registers (216) of the delegate processor (202) to store in these registers the parameters associated with a function to be executed simultaneously to the execution by the delegate processor of another function.

## Description

The present invention relates to a data transfer method in a multiprocessor system, to a multiprocessor system and to a processor that implements this method, in particular for the processing of multimedia data.

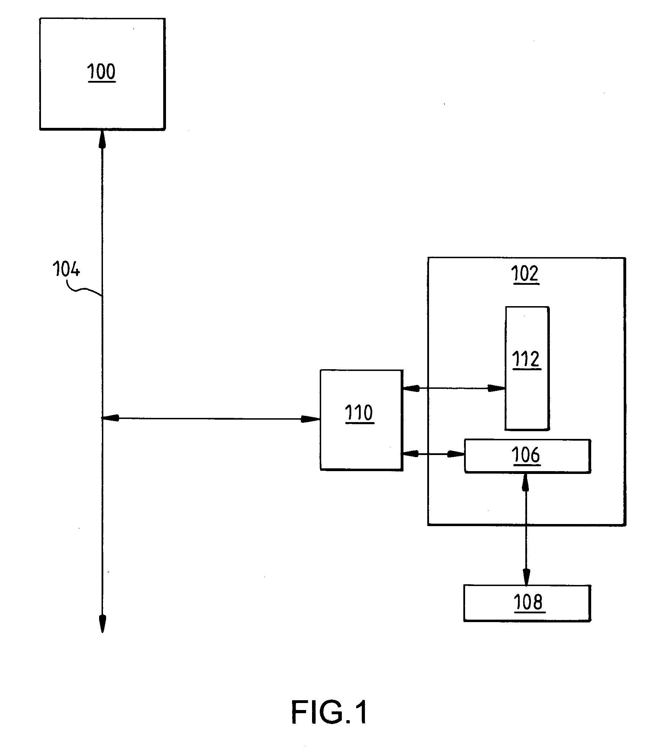

A multiprocessor system includes multiple processors and data transfer means amongst these processors. According to a known example of a multiprocessor system, a processor 100, as illustrated in figure 1 of the appendix, known as the delegating processor, executes a program by using the functions executed by a second processor 102 known as the delegate processor to, for example, accelerate the execution of the whole program.

In such a multiprocessor system, each processor contains the necessary internal registers for executing the instructions that form each function. In general, this set of registers contain a program counter, a stack pointer, a status register and work registers for processing data.

Moreover, the delegating processor 100 implements the procedure for execution of functions by the delegate processor 102 by establishing a base 110 of the necessary data for this execution, this base 110 being located between the delegating processor 100 and the delegate processor 102 to which the base is connected via a communication bus 104.

According to other variants, the bus 104 is internal to the delegating processor 100 and/or it connects multiple delegating processors (not shown) to the base 110 and to the delegate processor 102.

Furthermore, the base 110 can be created using different electronic components, such as:
- a buffer memory, shared between the delegating processor 100 and the delegate processor 102, of the Static Random Access Memory type or SRAM, a disk or a Flash memory,
- communication devices that process data according to the order they arrive, or FIFO ('First In First Out'),
- other communication means such as serial communication devices.

The delegate processor 102 then accesses the database 110 to extract, for example, an address or a symbol that is processed by an internal function decoder 106 of the delegate processor 102 to identify a function to execute. The internal function decoder 106 can identify the function called up in an external memory 108 containing all the functions that the delegate processor 102 can execute.

Subsequently, the delegate processor 102 then consults the base 110 to obtain the parameters necessary for executing of the function called up, these parameters are then saved in an internal memory 112.

Finally, the function called up can then execute itself in this memory 112 and provide its result.

It appears that a multiprocessor system according to prior art has the advantage of using standard electronic components - processors, bus, databases - that is, which do not require modifications for use in a multiprocessor system. In other words, a multiprocessor system enables the combination of the processing capacities that are specific to processors included in the system.

However, it has been observed that a known multiprocessor system has the disadvantage of requiring a significant amount of data access operations. For example, data transfer between the delegating processor 100 and the delegate processor 102 notably includes the following steps:
- transmission, by the delegating processor 100 to the base 110, of the parameters necessary for the execution of a function by the delegate processor 102,
- transmission, by the delegating processor 100 to the base 110, of a request for the execution of a function by the delegate processor 102,
- access by the delegate processor 102 to the base 110 to determine whether there is a request for the execution of its functions to implement.

Subsequently, if the delegate processor 102 finds such an execution request in the base 110, in the form of a symbol that is specific to this function or an address of one of the functions saved in its memory 108 for example, it executes this function.

For this purpose, at the beginning of this execution of this function, the delegate processor 102 must consult the base 110 again to access the parameters transmitted previously by the delegating processor 100.

This disadvantage implies that execution programs are complex and long as they include a significant quantity of access instructions (write or read) for data to transfer between the delegating processor 100 and delegate processor 102.

For example, the processing of multimedia data (images, audio, video) by multiprocessor systems is an application that requires extremely rapid execution as it is often implemented in real-time.

In this case, a delegating processor 100 establishes a database 110 containing, amongst others elements, memory addresses corresponding to pixels to be processed and to processing parameters of the values associated with the pixels (for example, brightness and color) to enable the delegate processor 102 to execute a function.

It thus appears, for a video use, that an estimated 10% to 15% of function execution time is required for data retrieval, this retrieval time is subsequently called "ineffective time" in terms of calculation or as the "Overhead".

The present invention aims to overcome at least one of the disadvantages mentioned above by reducing the time for a delegate processor to access the data necessary for the execution of a function commanded by the delegate processor.

For this reason, the invention concerns a method for transferring data from a delegating processor, requiring the execution of functions, to a delegate processor that executes these functions, based on a function identifier and execution parameters associated with this function, where this identifier and these parameters are provided by the delegating processor, characterized in that the delegating processor accesses a bank of internal registers of the delegate processor to store in these registers the parameters associated with a function to be executed simultaneously with the execution by the delegate processor of another function.

Hence, thanks to the invention, the program execution speed by a multiprocessor system is increased. Indeed, when the delegate processor begins to execute a function requested by the delegating processor, the delegate processor has immediate access to the parameters associated with this function that are already placed in its internal register bank.

In other words, there is no longer an "overhead" associated with external parameter read for function execution.

Therefore, the functions and programs invoking a delegating and a delegate processor are shorter and faster to establish due to the absence of instructions relative to the consultation of parameters associated with a function executed by the delegate processor.

In one embodiment, the delegating processor accesses internal registers that are exclusively allocated to this delegating processor for data storage.

According to an embodiment, an internal controller of the delegate processor orders the allocation of the registers, or memory space, of the registers bank to the delegating processor.

In one embodiment, prior to the allocation of memory space, the delegating processor requests an allocation of memory space by the delegate processor controller to store the parameters necessary to execute a function.

According to one embodiment, when the controller allocates a memory space to the delegating processor, this controller sends a memory space identifier allocated to the delegating processor, then this processor transfers the parameters for the execution of a function to the allocated memory space.

In one embodiment, the delegating processor transfers the data identifying the requested function to intermediate means between the delegate processor and the delegating processor, such as a FIFO random access memory.

According to one embodiment, the delegate processor's internal registers bank is a memory containing registers sub-sets with at least one of the following characteristics:
- each registers sub-set has its own read and write ports,
- each registers sub-set has the same amount of registers and contains all the registers necessary for the operation of the delegate processor for executing all functions that the delegate processor is capable of executing,
- each sub-set can communicate with the delegating processor or the delegate processor.

In one embodiment, the parameters are stored in the registers containing work registers that are necessary for the different data processing operations executed by the delegate processor or the delegating processor.

The invention also relates to a multiprocessor system containing at least one delegating processor, capable of requesting the execution of functions by a delegate processor that executes these functions based on a function identifier and execution parameters associated with this function, this identifier and these parameters being provided by the delegating processor, characterized in that it contains means for the delegating processor to access a bank of internal registers of the delegate processor to store, in these internal registers, parameters associated with a function to be executed simultaneously to the execution by the delegate processor of another function in accordance with a method compliant with at least one of the aforementioned embodiments.

In one embodiment, the multiprocessor system contains multiple delegating microprocessors that are connected to the same delegate microprocessor.

The invention also relates to a delegate processor capable of executing functions based on a function identifier and execution parameters, associated with this function, this identifier and these parameters being provided by a delegating processor, characterized in that it contains means for the delegating processor to access a bank of internal registers of said delegate processor to store the parameters associated with a function simultaneously with the execution, by the delegate processor, of another function in accordance with a method compliant with at least one of the aforementioned embodiments.

Other characteristics and advantages of the invention will emerge with the description made below, which is descriptive and non-restrictive, in reference to the figures herein where:
- figure 1, described previously, schematically represents data transfer in a multiprocessor system according to prior art,
- figure 2 schematically represents data transfer in a multiprocessor system according to the invention, and
- figure 3 represents a register bank structure in a delegate processor according to the invention.

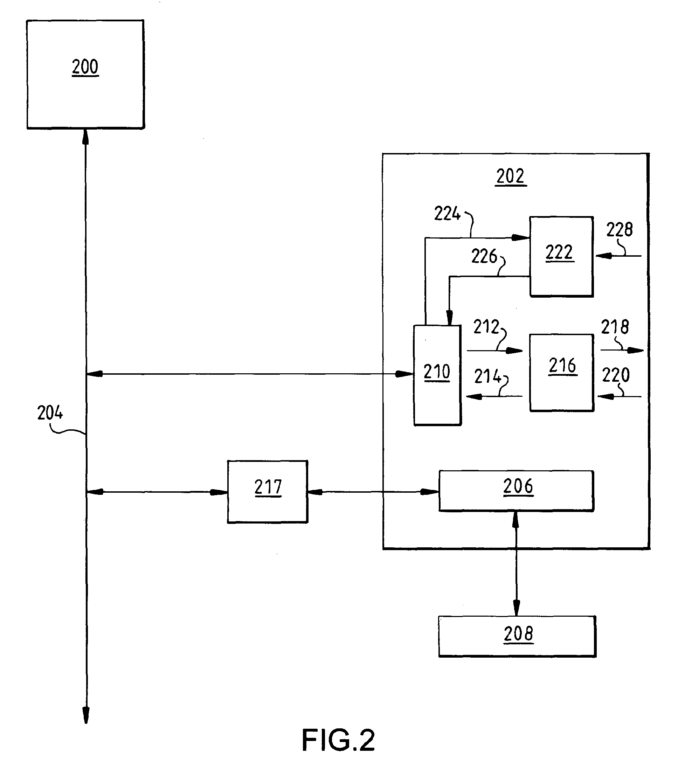

In the preferred embodiment of the invention, a delegate processor 202 (figure 2) contains an internal registers bank 216, that can be accessed by the instructions of this delegate processor 202 in write mode, via write port 220, and in read mode via a read port 218.

This registers bank 216 can also be accessed by a delegating processor 200 in write mode, via a write port 212, and in read mode, via a port 214 using:
- a communication bus 204, which may be internal or external to the delegating processor 200, and may also connect other processors (not shown)
- and an interface 210 that is internal to the delegate processor 202, which receives and sends data on the bus 204.

The bank 216 is controlled by a controller 222, internal to the delegate processor 202. This controller 222 allocates clearly identified memory spaces in the bank 216 to the delegate processor 202 and to the delegating processor 200, so that these two processors can operate in parallel in the bank 216.

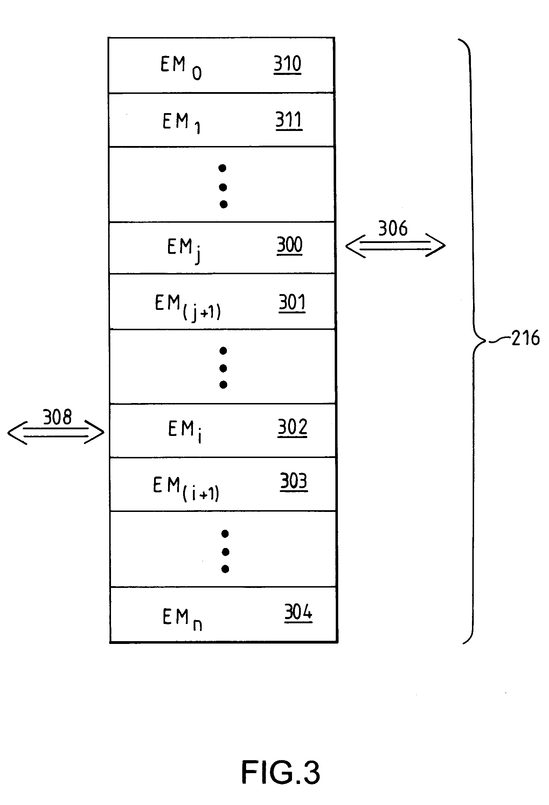

In this preferred embodiment, the registers bank 216 contains memory spaces EM0 310 (figure 3), EM1 311, ...EMj 300, EM(j+1) 301, ..., EMi 302, ... EMn 304, each memory space being a set of independent registers that allows the delegate processor to execute all its functions in each memory space.

Each memory space thus contains the work registers necessary for the different data processing operations executed by the delegate processor 202 or the delegating processor 200. Moreover, each memory space has its own write and read ports.

In a practical example adapted to the current transfer rates capacities of the processors used, particularly in the image processing domain, the bank 216 comprises 4 portions including 16 registers each, thus constituting 64 registers.

Hence, the delegate processor and the delegating processor always operate in different memory spaces using the controller 222, which prevents allocation conflicts by allocating memory spaces in a token ring buffer memory order.

As the diagram in figure 3 shows, the delegate processor 202 is executing a function through the write and read ports 306 in the memory space 300 EMj while the delegating processor 200 is writing parameters necessary for the execution of another function in the memory space 302 EMi through the read and write ports 308.

One of the advantages of this invention is thus noted, namely that the delegate processor 202 has direct access to the parameters necessary for the execution of a function as they are already stored by the delegating processor 200 in its registers bank 216.

In other words, the delegate processor 202 does not need to access these parameters in an external base, which significantly reduces the data consultation periods.

A FIFO base 217 is used by the delegating processor 200 for transferring the data representing the function to be executed to the delegate processor 202.

In fact, the delegating processor 200 and the delegate processor 202 are capable of interpreting the data representing the function to be executed, for example by means of a symbolic representation of the function to be executed, or an explicit address of the function in a memory 208 that is external to the delegate processor 202. In this case, these data are decoded using decoding means 206 of the delegate processor 202.

Hence, the delegate processor 202 executes a function when it has the possibility to implement a new function. In this case, the processor 202 accesses the FIFO base 217, which determines the function to be executed, and at the same time, changes the memory space allocation in the registers bank 216 so that the new memory space allocated to this function corresponds to a memory space in which the parameters necessary for executing the new function are stored.

In this preferred embodiment of the invention, when the delegating processor 200 requires a function to be executed by the delegate processor 202, the data transfer method is implemented in two steps, as follows, (figure 2 and 3):
- According to a first step, the delegating processor 200 transmits the parameters necessary for the embodiment of the function that it wants to be executed by the delegate processor 202 and requests this function to be executed without interrupting any computation activity in the delegate processor 202.
   To do so, the delegating processor 200 requests memory space to be allocated from the interface 210 of the delegate processor 202 in its registers bank 216 and awaits response from the data bus 204.
   The interface 210 transfers a message 224 to the controller 222 requesting the allocation of memory space in the bank 216.
   When such an allocation is possible, the controller transfers the memory space identifier 226 allocated to the delegating processor 200, for example EMi 302.
   Using this identifier, the delegating processor 200 writes the parameters necessary for executing this function via the interface 210 and the write and read ports 212 / 214, into its memory space allocated EMi 302.
   Then the processor 200 transfers to the FIFO base 217 data representing the function to be executed, which are, for example, either a symbolic representation of the said function or an address from the memory 208.
- According to a second step, when the delegate processor 202 is ready to execute a new function requested by the delegating processor 200, the delegate processor 202 positions itself at the beginning of the instruction series forming the function requested by the delegating processor 200 by using the parameters written to the allocated memory space for this new function, namely EMi 302, so that the delegating processor can begin to execute the function immediately.

It should be pointed out that, in this preferred embodiment of the invention, memory space is allocated by the controller 222 in the following manner:

When the delegate processor 202 is enabled, no memory space is allocated to either the delegating processor 200 or the delegate processor 202.

When the delegating processor 200 requests an initial allocation of memory space, the first memory space EM0 310 is allocated. Then, when the delegating processor 200 requests a new memory space allocation after being allocated the EMi 302 memory space, the controller allocates the memory space 303 {EM(i+1) modulo n} to it, where n is a whole number, except where this new memory space {(EM(i+1) or EM0} is already used by the delegate processor 202.

In this latter case, the delegating processor 200 waits until this new memory space {EM(i+1) or EM0 if i=n+1} becomes available.

This invention embodies several variants. In particular, in one variant, several delegating processors access, simultaneously for instance, the internal register of the processor 202.

## Claims

1. Method for transferring data from a delegating processor (200), requiring the execution of functions, to a delegate processor (202), executing these functions based on a function identifier and execution parameters associated with this function, this identifier and these parameters being provided by the delegating processor, **characterized in that** the delegating processor (200) accesses an internal registers bank (216) (Em0 310, EM1 311,...EMj 300, EM(j+1) 301,..., EMi 302,... EMn 304) of the delegate processor (202) to store in these registers (Em0 310, EM1 311,...EMj 300, EM(j+1) 301,..., EMi 302,... EMn 304) the parameters associated with a function to be executed simultaneously with the execution by the delegate processor of another function .

2. Method according to claim 1 **characterized in that** the delegating processor (200) accesses internal registers (Em0 310, EM1 311,...EMj 300, EM(j+1) 301,..., EMi 302,... EMn 304) exclusively allocated to this delegating processor for data storage.

3. Method according to claim 1 or 2 **characterized in that** an internal controller (222) of the delegate processor (202) commands allocation of the registers (Em0 310, EM1 311,...EMj 300, EM(j+1) 301,..., EMi 302,... EMn 304) of the registers bank to the delegating processor (200).

4. Method according to claim 3 **characterized in that**, prior to the allocation of memory space, the delegating processor (200) requests an allocation of memory space (Em0 310, EM1 311,...EMj 300, EM(j+1) 301,..., EMi 302,... EMn 304) from the controller (222) of the delegate processor (202) to store parameters necessary for executing a function.

5. Method according to claim 4 **characterized in that**, when the controller (222) allocates a memory space (Em0 310, EM1 311,...EMj 300, EM(j+1)301,..., EMi 302,... EMn 304) to the delegating processor (200), this controller (222) sends a memory space identifier (226) allocated to the delegating processor (200) then the latter transfers the parameters for executing a function to the allocated memory space.

6. Method according to one of the aforementioned claims **characterized in that** the delegating processor (200) transfers data identifying the function requested in means (217) lying between the delegate processor (202) and the delegating processor (200), such as a FIFO random access memory.

7. Method according to one of the aforementioned claims **characterized in that** the internal registers bank (216) (Em0 310, EM1 311,...EMj 300, EM(j+1) 301,..., EMi 302,... EMn 304) of the delegate processor (202) is a memory containing registers sub-sets with at least one of the following characteristics:
- each registers sub-set has its own write and read ports,
- each registers sub-set has the same amount of registers and contains all the registers necessary for the operation of the delegate processor for executing all functions that the delegate processor is capable of executing,
- each sub-set can communicate with the delegating processor or the delegate processor.

8. Method according to one of the aforementioned claims **characterized in that** the parameters are stored in registers (Em0 310, EM1 311,...EMj 300, EM(j+1) 301,..., EMi 302,... EMn 304) containing work registers necessary for the different data processing operations executed by the delegate processor or the delegating processor.

9. Multiprocessor system containing at least one delegating processor (200), capable of requesting the execution of functions by a delegate processor (202), which executes these functions based on a function identifier and execution parameters associated with this function, this identifier and these parameters being provided by the delegating processor (200), **characterized in that** it contains means for the delegating processor (200) to access a bank (216) of internal registers (Em0 310, EM1 311,...EMj 300, EM(j+1) 301,..., EMi 302,... EMn 304) of the delegate processor (202) to store, in these internal registers (Em0 310, EM1 311,...EMj 300, EM(j+1) 301,..., EMi 302,... EMn 304), parameters associated with a function to be executed simultaneously to the execution by the delegate processor (202) of another function according to a method in accordance with at least one of the aforementioned claims.

10. Multiprocessor system according to claim 9 **characterized in that** multiple delegating microprocessors are in contact with the same delegate microprocessor.

11. Delegate processor (202) capable of executing functions based on a function identifier and execution parameters associated with this function, this identifier and these parameters being provided by a delegating processor (200), **characterized in that** it contains means for the delegating processor (200) to access an internal registers bank (216) of said delegate processor to store parameters associated with a function simultaneously with the execution, by said delegate processor, of another function in accordance with a method compliant with one of claims 1 to 8.
